# EUROPEAN PATENT SPECIFICATION

(11) **EP 1 223 650 B1**
(45) Date of publication and mention of the grant of the patent: **29.06.2011**
(21) Application number: 01500293.4
(22) Date of filing: 27.12.2001
(51) Int. Cl.: H02G 3/30

(54) **Pressure plug for supporting electric cables**
Druckdübel zur Haltung elektrischer Kabel
Cheville à pression pour support de câbles électriques

(30) Priority: 11.01.2001 ES 200100054 U
(43) Date of publication of application: 17.07.2002
(73) Proprietor: Unex Aparellaje Electrico S.L., 08903 L'Hospitalet de Llobregat (Barcelona) (ES)
(72) Inventor: Benito Navazo, Juan Manuel, 08290 Sant Cugat Del Valles (Barcelona) (ES)
(74) Representative: Curell Aguilà, Marcelino

(56) References cited:
- FR-A- 2 450 969
- US-A- 4 609 170
- US-A- 5 906 465

## Description

### Field of the Invention

The present invention refers to a pressure plug for supporting electric cables, particularly one of the type that is forced under percussion into a hole purposely formed in a wall and while being formed by a integral member made from synthetic plastics material, is formed by differentiated portions such as a flattened head, provided with means for the insertion of a flexible tie or another binding element, and a rigid shaft provided along the entire length thereof, except over a short thicker portion, where it is connected to the said head, with a plurality of flanges or annular ribs that are identical and equidistantly spaced apart.

### Prior Art

These plugs, as said above, are attached to a wall by inserting them under pressure in a hole purposely formed in the wall. To achieve a stable fixation it is necessary that the diameter of said hole should be slightly smaller than the diameter of the annular ribs so that these annular ribs are forced to reduce their diameter and adapt themselves to the diameter of the hole, which they do by deformation of the annular plane thereof and adoption of a undulating configuration therefor, in a curved or gathered style.

This undulating curved or gathered configuration is the result of a completely irregular distribution that does not assure the stability of fixation, since each annular rib will deform in a different way depending on the direction of the percussion, the hardness of the material in the different layers thereof inside the hole in the wall and on whether the hole has been correctly made, both with regard to the plug/hole diameter relationship and in the inclination thereof relative to the plane of the wall.

Document FR-A- 2 450 969 discloses a pressure plug for supporting electric cables according to the prior art

### Summary of the Invention

With the purpose of assuring the stable fixation of the plug under any circumstances whatsoever, the solution has been adopted of forming the annular ribs in such a way that, when inserting the plug in the hole appropriate for the purpose, the annular ribs are deformed in a regular way like a barbed arrangement.

In accordance with the foregoing solution, the pressure plug for supporting electric cables object of the invention has been developed, according to which each and every one of the annular ribs has two or more mutually linearly aligned radial gaps that define a like number of longitudinal slots.

A characteristic of the invention consists in that the radial gaps of the annular ribs determining the longitudinal slots are regularly arranged.

Another characteristic of the invention is to be found in that the number of longitudinal slots is such that it allows the gapped annular ribs to have, in each case, a sufficient capacity of anchorage in the hole.

Finally, the invention contemplates that the longitudinal slots are preferably distributed according to an arrangement of the group formed by diametrical opposition, separation at 120°, separation at 90°, separation at 72°, separation at 60° and separation at 45°.

### Brief Description of the Drawings

To facilitate the understanding of the foregoing ideas, there is described herein below the object of the invention, with reference to the accompanying illustrative drawings, in which:

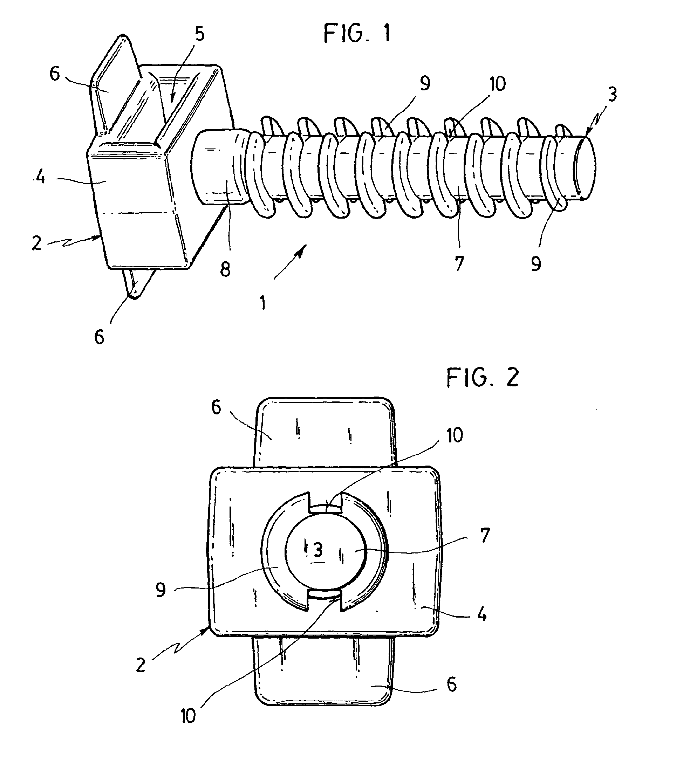

Figure 1 is a side perspective view of a pressure plug according to the invention.
Figure 2 is an elevation view of the pressure plug of Figure 1.

### Detailed Description of the Invention

The pressure plug 1, shown by way of example in the drawings, comprises a head portion 2 and a body portion 3.

The head portion 2 is formed by a hollow parallelepipedic body 4 having a through opening between two median open surfaces 5 and two flexible tabs 6 extending from two opposite sides of the outer larger surface, while the body portion 3 is formed by a rigid shaft 7 provided with a short portion 8, thicker than the rest, which is connected to the head portion 2 and with a plurality of identical equidistantly spaced apart annular ribs 9 each having two or more mutually lineally aligned radial gaps 10 defining a like number of longitudinal slots 11.

These longitudinal slots are preferably distributed according to an arrangement of the group formed by diametrical opposition, adopted in the plug shown in the drawings, and separation at 45°, 60°, 72°, 90° and 120°.

The number of longitudinal slots is such that it allows the gapped annular ribs 9 to have, in each case, the appropriate capacity of anchorage in the hole in the wall.

Evidently, with the novel arrangement of the gapped annular ribs 9, they will be deformed evenly inside the hole in a semi-frustoconical form and having the nature of a barbed arrangement directed in a direction opposed to that of removal of the plug, whereby the plug 1 will be highly stable when embedded in the wall.

## Claims

1. A pressure plug for supporting electric cables, of the type that is forced under percussion into a hole purposely formed in a wall and while being formed by a integral member made from synthetic plastics material, is formed by differentiated portions such as a flattened head (2), provided with means for the insertion of a flexible tie or another binding element, and a rigid shaft (7) provided along the entire length thereof, except over a short thicker portion, where it is connected to the head (2), with a plurality of annular ribs (9) that are identical and equidistantly spaced apart, wherein each and every one of the annular ribs (9) has two or more radial gaps (10) that, in mutual linear correspondence, define a like number of longitudinal slots (11).

2. The plug according to claim 1, wherein the radial gaps (10) of the annular ribs (9) that determine the longitudinal slots (11), are regularly arranged.

3. The plug according to claim 1, wherein the number of longitudinal slots (11) is such that it allows the gapped annular ribs (9) to have, in each case, sufficient capacity of anchorage in the hole.

4. The plug according to claim 2, wherein the longitudinal slots (11) are distributed according to a disposition of the group that comprises diametrical opposition, separation at 120°, separation at 90°, separation at 72°, separation at 60° and separation at 45°.

## Patentansprüche

1. Druck-Stöpsel zum Stützen elektrischer Kabel, des Typs, welcher mittels Schlag in ein absichtlich in einer Wand gebildetes Loch gezwungen ist und welcher während er von einem integralen Element gebildet ist, welches aus synthetischem Kunststoffmaterial gemacht ist, von differenzierten Abschnitten geformt ist, so wie einen abgeflachten Kopf (2), welcher mit Mitteln für den Einsatz von einem Band oder einem anderen Bindungselement ausgestattet ist, und einem starren Schaft (7), welcher entlang seiner gesamten Länge, außer über einen kurzen dickeren Abschnitt, wo er mit dem Kopf (2) verbunden ist, mit einer Vielzahl von ringförmigen Rippen (9) ausgestattet ist, die identisch und äquidistant beabstandet voneinander sind, wobei jede der ringförmigen Rippen (9) zwei oder mehr radiale Spalte (10) hat, die, in wechselseitig linearer Korrespondenz, eine gleiche Anzahl von Längsschlitzen (11) definieren.

2. Stöpsel nach Anspruch 1, wobei die radialen Spalte (10) der ringförmigen Rippen (9), die die Längsschlitze (11) defenieren, regelmäßig angeordnet sind.

3. Stöpsel nach Anspruch 1, wobei die Anzahl der Längsschlitze (11) derart ist, dass sie den gespaltenen ringförmigen Rippen (9) in jedem Fall erlauben, eine ausreichende Verankerungsfähigkeit in dem Loch zu haben.

4. Stöpsel nach Anspruch 2, wobei die Längsschlitze (11) entsprechend einer Zusammenstellung der Gruppe, umfassend diametralen Gegensatz, Teilung bei 120°, Teilung bei 90°, Teilung bei 72", Teilung bei 60° und Teilung bei 45°, verteilt sind.

## Revendications

1. Cheville de pression dévolue au support de câbles électriques, du type enfoncé par percussion dans un trou spécialement pratiqué dans une paroi, ladite cheville, bien que formée d'une pièce monobloc fabriquée en matière synthétique, se composant de parties bien distinctes telles qu'une tête aplatie (2) munie de moyens destinés à l'insertion d'une attache flexible, ou d'un autre élément de liaison, et un fût rigide (7) pourvu sur l'intégralité de sa longueur, à l'exception d'une courte région plus épaisse dans laquelle il est relié à ladite tête (2), d'une pluralité de nervures annulaires (9) identiques et équidistantes, sachant que chacune desdites nervures annuaires (9) comporte des discontinuités radiales (10), au nombre de deux ou plus, qui définissent un nombre identique de fentes longitudinales (11) par concordance linéaire mutuelle.

2. Cheville scion la revendication 1, dans laquelle les discontinuités radiales (10) des nervures annulaires (9), qui déterminent les fentes longitudinales (11), sont agencées de façon régulière.

3. Cheville selon la revendication 1, dans laquelle le nombre de fentes longitudinales (11) est propre à permettre aux annulaires discontinues (9) de présenter, dans tous les cas, une aptitude suffisante à l'ancrage dans le trou.

4. Cheville selon la revendication 2, dans laquelle les fentes longitudinales (11) sont réparties selon une disposition incluse dans la plage comprenant une opposition diamétrale, une séparation à 120°, une séparation à 90°, une séparation à 72°, une séparation à 60° et une séparation à 45°.
